# EUROPEAN PATENT SPECIFICATION

(11) **EP 4 438 442 B1**
(45) Date of publication and mention of the grant of the patent: **22.07.2026**
(21) Application number: 21965651.9
(22) Date of filing: 26.11.2021
(51) Int. Cl.: B62D 5/04, F16H 55/06, F16H 55/17, F16H 55/22

(54) **GEAR AND STEERING DEVICE**
GETRIEBE- UND LENKVORRICHTUNG
ENGRENAGE ET DISPOSITIF DE DIRECTION

(43) Date of publication of application: 02.10.2024
(73) Proprietor: JTEKT Corporation, Kariya-shi, Aichi-ken, 448-8652 (JP)
(72) Inventor: KIKUCHI, Arata, Kariya-shi, Aichi 448-8652 (JP); OKUMURA, Koji, Kariya-shi, Aichi 448-8652 (JP)
(74) Representative: Winter, Brandl - Partnerschaft mbB
(86) International application number: PCT/JP2021/043359
(87) International publication number: WO 2023/095279

(56) References cited:
- DE-A1- 102012 102 775
- DE-A1- 102014 104 284
- JP-A- 2001 304 379
- JP-A- 2001 336 611
- JP-A- 2003 139 219
- JP-A- 2003 139 219
- JP-A- 2013 061 004
- JP-A- 2017 082 860
- KR-B1- 101 799 213

## Description

### TECHNICAL FIELD

The present invention relates to a gear and a steering system.

### BACKGROUND ART

For example, there is known a speed reducer for an automotive steering system, including a worm and a gear serving as a worm wheel that meshes with the worm. In such a gear, a disc-shaped resin sleeve and a resin toothing that covers the entire outer peripheral portion of the sleeve and has a plurality of gear teeth are integrally molded (see, for example JP 2017 - 82860 A).
Further, DE 10 2014 104 284 A1 discloses a gear wheel, for example a worm gear, which is used in an electromechanical steering system, wherein the gear wheel comprises an inner part, an outer part, and a connecting part which connects the inner part and the outer part.

### SUMMARY OF THE INVENTION

### Problem to be Solved by the Invention

When manufacturing a gear, a sleeve made of a reinforced resin material is first molded, and then a toothing is molded from a non-reinforced resin material with the sleeve inserted. At this time, it is necessary to increase the holding pressure in the mold in order to increase the accuracy of the gear teeth. When an attempt is made to increase the holding pressure, however, the sleeve may be heated by the molten resin, the rigidity of the sleeve may decrease, and part of the sleeve may slightly be deformed due to thermal contraction. This deformation results in a decrease in gear accuracy (mesh runout).

An object of the present invention is to suppress a decrease in gear accuracy.

### Means for Solving the Problem

In order to solve the above problem, a gear according to the present invention includes the features of claim 1.

A steering system according to aspect the present invention includes an electric motor to be driven based on steering of a steering member, and a speed reducer including the above gear and configured to reduce a speed of output rotation of the electric motor by the gear and transmit the output rotation to a steering mechanism.

### Effects of the Invention

According to the present invention, it is possible to suppress the decrease in the gear accuracy.

### BRIEF DESCRIPTION OF THE DRAWINGS

FIG. 1 is a schematic diagram of a steering system according to an embodiment.
FIG. 2 is a perspective view of a gear according to the embodiment that is viewed from a front side.
FIG. 3 is a plan view of the front side of the gear according to the embodiment.
FIG. 4 is a plan view of a rear side of the gear according to the embodiment.
FIG. 5 is a partial front view of part of a sleeve according to the embodiment that is viewed from the front side.
FIG. 6 is a partial sectional view of part of a toothing and the sleeve according to the embodiment that are viewed in an X-axis direction.

### MODES FOR CARRYING OUT THE INVENTION

An embodiment will be described in detail below with reference to the drawings. The embodiment described below illustrates an inclusive or specific example. Numerical values, shapes, materials, components, and disposition positions and connection forms of the components illustrated in the following embodiment are examples, and do not limit the present invention. Among the components in the following embodiment, components that are not described in the independent claims showing the broadest concepts will be described as optional components.

The drawings are schematic drawings in which objects are emphasized, omitted, or adjusted in terms of their proportions as appropriate to demonstrate the present invention. Therefore, shapes, positional relationships, and proportions may differ from actual shapes, positional relationships, and proportions.

In the following description and drawings, an axial direction of a gear is defined as a Y-axis direction. The X-axis direction is a direction perpendicular to the Y-axis direction, and a Z-axis direction is a direction perpendicular to both the Y-axis direction and the X-axis direction. In the following description, for example, a positive X-axis direction indicates a side in an arrow direction of the X-axis, and a negative X-axis direction indicates a side opposite to the positive X-axis direction. The same applies to the Y-axis direction and the Z-axis direction. Terms such as "parallel", "orthogonal", and "coincident" that indicate relative directions, postures, or positions include cases where the orientations, postures, or positions are not strictly the same. For example, description "two straight lines are coincident" means not only that the two straight lines are coincident completely but also that they are substantially coincident, that is, includes a difference of about several percent.

### [Steering System]

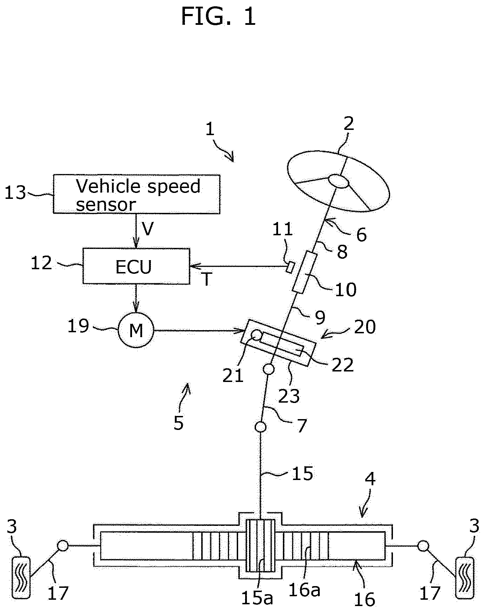

FIG. 1 is a schematic diagram of a steering system 1 according to the embodiment. As shown in FIG. 1, the steering system 1 is an electric power steering system that includes a steering mechanism 6 and a steering operation mechanism 4 and turns steered wheels 3 based on a driver's steering (steering operation) on a steering wheel 2 (steering member). The steering mechanism 6 includes an assist mechanism 5 that assists the driver's steering operation.

The steering mechanism 6 includes an input shaft 8, an output shaft 9, an intermediate shaft 7, and a pinion shaft 15. The input shaft 8 is connected to the steering wheel 2. The output shaft 9 is connected to the input shaft 8 via a torsion bar 10. The intermediate shaft 7 is connected to the pinion shaft 15 including a pinion 15a via a universal joint.

The steering operation mechanism 4 includes a rack shaft 16 and tie rods 17. The rack shaft 16 includes a rack 16a meshing with the pinion 15a. The tie rod 17 has one end connected to the rack shaft 16 and the other end connected to the steered wheel 3.

When the steering wheel 2 rotates in response to the driver's operation on the steering wheel 2, the pinion shaft 15 rotates via the input shaft 8, the output shaft 9, and the intermediate shaft 7. The rotation of the pinion shaft 15 is converted by the steering operation mechanism 4 into reciprocating motion of the rack shaft 16 in the axial direction. The reciprocating motion of the rack shaft 16 in the axial direction changes the steered angles of the steered wheels 3.

The assist mechanism 5 includes a torque sensor 11, an ECU (Electronic Control Unit) 12, an electric motor 19, and a speed reducer 20. The speed reducer 20 includes a worm 21, a gear 22 structured as a worm wheel meshing with the worm 21, and a housing 23 that houses the worm 21 and the gear 22. The worm 21 is connected to a rotary shaft (not shown) of the electric motor 19. The gear 22 is connected to the output shaft 9 so as to be rotatable together with the output shaft 9.

When the steering wheel 2 rotates along with the driver's steering, the torque sensor 11 detects the amount of torsion between the input shaft 8 and the output shaft 9. The ECU 12 determines an assist torque based on a steering torque T obtained from the amount of torsion detected by the torque sensor 11, a vehicle speed V detected by a vehicle speed sensor 13, etc. The drive of the electric motor 19 is controlled by the ECU 12. The electric motor 19 driven in this manner based on the steering of the steering wheel 2 transmits output rotation to the worm 21 to rotate the worm 21 . Then, the gear 22 meshing with the worm 21 rotates at a lower speed than that of the worm 21, and the gear 22 and the output shaft 9 rotate together. In this manner, the speed reducer 20 reduces the speed of the output rotation of the electric motor 19 by using the gear 22 and transmits it to the output shaft 9 of the steering mechanism 6 as an assist torque. Thus, the driver's steering operation on the steering wheel 2 is assisted.

### [Gear]

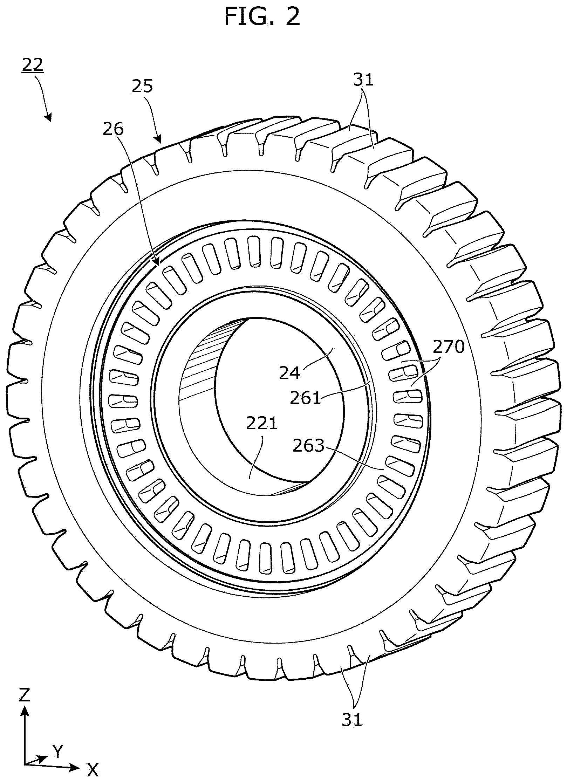

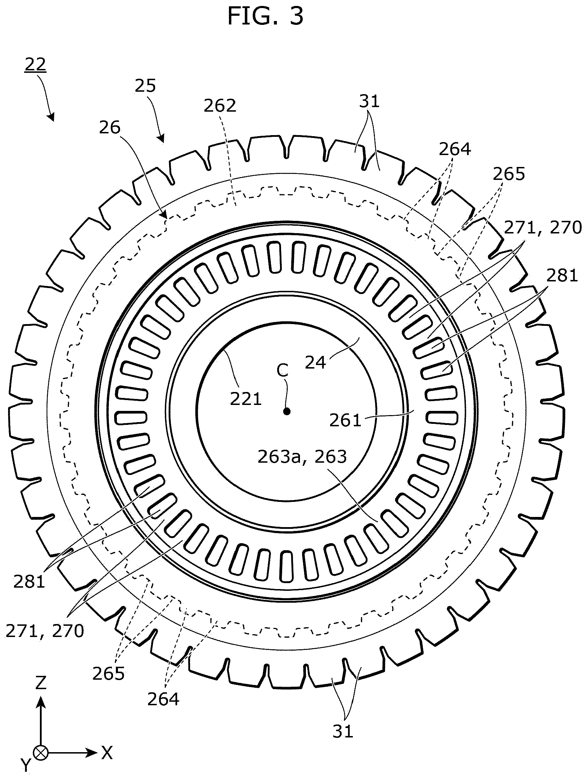

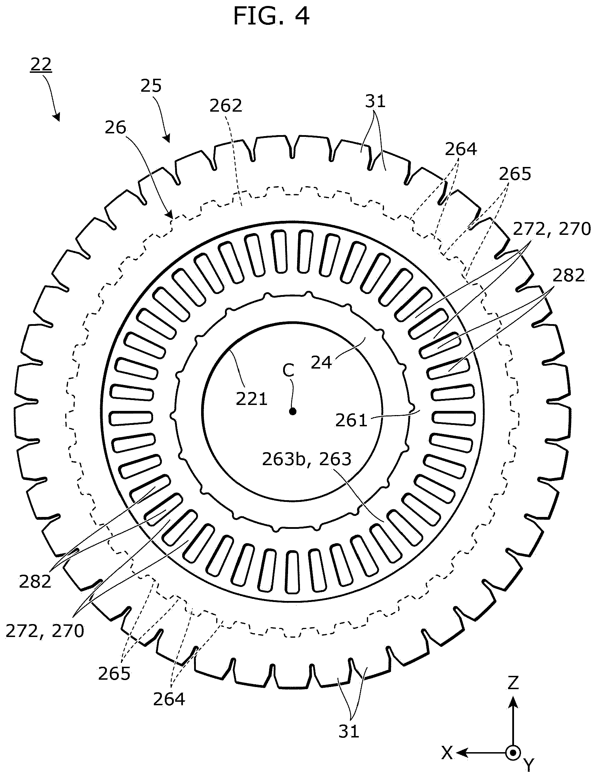

Next, the gear 22 will be described in detail. FIG. 2 is a perspective view of the gear 22 according to the embodiment that is viewed from a front side. FIG. 3 is a plan view of the front side of the gear 22 according to the embodiment. FIG. 4 is a plan view of a rear side of the gear 22 according to the embodiment. In FIGS. 3 and 4, the outline of a sleeve 26 of the gear 22 is shown by a dashed line.

As shown in FIGS. 2 to 4, the gear 22 has a disc shape. As described above, the Y-axis direction is the axial direction of the gear 22, and may also be a thickness direction of the gear 22. A central axis C of the gear 22 extends in the Y-axis direction through the center of a circle of the gear 22. A negative Y-axis direction is the front side of the gear 22, and a positive Y-axis direction is the rear side of the gear 22.

The gear 22 has a circular through hole 221 extending through the center of the circle along the Y-axis direction. The output shaft 9 is press-fitted to the through hole 221, and therefore the gear 22 is connected to the output shaft 9 so as to be rotatable together with the output shaft 9. A plurality of gear teeth 31 meshing with the worm 21 is formed on the entire outer peripheral surface of the gear 22 and arranged at equal intervals in a circumferential direction of the gear 22. The installation location of each gear tooth 31 in the circumferential direction will be referred to as "third installation location". The third installation locations are arranged at equal intervals in the circumferential direction. The present embodiment illustrates a case where the total count of third installation locations (third installation location count N) is 41. It is only necessary that one gear tooth 31 be provided at each third installation location. However, two or more gear teeth 31 may be arranged in the axial direction (Y-axis direction) at one third installation location.

The clearance between adjacent gear teeth 31 has a shape of a groove obtained by cutting out the outer peripheral portion of the gear 22 in the Y-axis direction. When the worm 21 rotates with the gear teeth 31 meshing with the worm 21, the gear 22 rotates in the circumferential direction.

The gear 22 includes a collar 24, a toothing 25, and the sleeve 26. The collar 24 is a cylindrical metal member having a central axis that coincides with the central axis C. The through hole 221 of the gear 22 is defined by the inner peripheral surface of the collar 24. The toothing 25 is a resin member made of, for example, a non-reinforced resin and serving as the plurality of gear teeth 31. The toothing 25 has an annular shape and continuously covers an entire outer peripheral portion 262 of the sleeve 26. The plurality of gear teeth 31 is formed on the outer peripheral surface of the toothing 25.

The sleeve 26 is a member coaxially fitted onto the collar 24. The sleeve 26 has a disc shape and is a resin member made entirely of a resin. More specifically, the sleeve 26 is made of a reinforced resin mixed with, for example, glass fiber.

The sleeve 26 integrally includes an inner peripheral portion 261 positioned at the innermost side in a radial direction, the outer peripheral portion 262 portioned at the outermost side in the radial direction, and a connecting portion 263 that is disposed between the inner peripheral portion 261 and the outer peripheral portion 262 and connects the inner peripheral portion 261 and the outer peripheral portion 262.

The inner peripheral portion 261 has an annular shape with a central axis that coincides with the central axis C. The collar 24 is fitted to the inner peripheral surface of the inner peripheral portion 261. The outer peripheral portion 262 has an annular shape and is disposed coaxially with the inner peripheral portion 261. A plurality of protrusions 264 that protrudes radially outward is formed on the outer peripheral surface of the outer peripheral portion 262 and arranged at equal intervals in the circumferential direction of the outer peripheral portion 262. In FIGS. 3 and 4, the plurality of protrusions 264 is shown by dashed lines. A space between a pair of adjacent protrusions 264 will be referred to as "recess 265". Therefore, a plurality of recesses 265 is provided on the outer peripheral surface of the outer peripheral portion 262. The plurality of recesses 265 is arranged at equal intervals in the circumferential direction of the outer peripheral portion 262.

The installation location of each protrusion 264 in the circumferential direction will be referred to as "first installation location". The first installation locations are arranged at equal intervals in the circumferential direction. The present embodiment illustrates a case where the total count of first installation locations (first installation location count L) is 41. It is only necessary that one protrusion 264 be provided at each first installation location. However, two or more protrusions 264 may be arranged in the axial direction (Y-axis direction) at one first installation location.

The connecting portion 263 is an annular portion disposed between the inner peripheral portion 261 and the outer peripheral portion 262 so as to continuously connect the inner peripheral portion 261 and the outer peripheral portion 262 over the entire circumference. A plurality of ribs 270 is arranged in the connecting portion 263 at equal intervals in the circumferential direction. Since the connecting portion 263 is a portion on a radially inner side of the outer peripheral portion 262, the plurality of ribs 270 is disposed on a radially inner side of the plurality of protrusions 264.

Specifically, as shown in FIG. 3, a plurality of first ribs 271 that is part of the plurality of ribs 270 is arranged at equal intervals in the circumferential direction on a first principal surface 263a on the front side of the connecting portion 263. A space between the plurality of first ribs 271 in the circumferential direction is a first hole 281. That is, the plurality of first ribs 271 and the plurality of first holes 281 are arranged alternately in the circumferential direction. The first holes 281 have the same shape in a plan view (as viewed in the Y-axis direction), and are long holes that are elongated in the radial direction.

As shown in FIG. 4, a plurality of second ribs 272 that is part of the plurality of ribs 270 is arranged at equal intervals in the circumferential direction on a second principal surface 263b on the rear side of the connecting portion 263. A space between the plurality of second ribs 272 in the circumferential direction is a second hole 282. That is, the plurality of second ribs 272 and the plurality of second holes 282 are arranged alternately in the circumferential direction. The second hole 282 and the first hole 281 are lightening holes for reducing the weight of the sleeve 26.

The second holes 282 have the same shape as the first holes 281 in a plan view (as viewed in the Y-axis direction). Each second hole 282 is disposed at a position corresponding to each first hole 281. Therefore, each second rib 272 has the same shape as each first rib 271 and is disposed at a position corresponding to each first rib 271. That is, the corresponding first rib 271 and the corresponding second rib 272 are installed at the same installation location. This installation location will be referred to as "second installation location". The second installation locations are arranged at equal intervals in the circumferential direction. It is only necessary that one set of the first rib 271 and the second rib 272 be provided at each second installation location. The present embodiment illustrates a case where the total count of second installation locations (second installation location count M) is 41. That is, the first installation location count L, the second installation location count M, and the third installation location count N are equal to each other.

During manufacturing, a mold is filled with a molten resin serving as the toothing 25 while the sleeve 26 molded first is disposed in the mold. At this time, the rigidity of the sleeve 26 may decrease due to heat from the molten resin and holding pressure in the mold, and some portions may slightly be deformed. Since the first installation location count L and the second installation location count M are equal to each other and a constant holding pressure is applied in the mold, the slightly deformed portions can be generated at synchronized positions in the circumferential direction for the protrusions 264 and the ribs 270. Since the third installation location count N of the gear teeth 31 in the toothing 25 is equal to the first installation location count L and the second installation location count M, the slightly deformed portions of the sleeve 26 and the gear teeth 31 are present at synchronized positions in the circumferential direction. Therefore, even if each gear tooth 31 is also slightly deformed due to each slightly deformed portion of the sleeve 26, the deformed portion of each gear tooth 31 is also generated substantially at the same position. If a different portion is deformed in each gear tooth 31, a fluctuation in a period different from the meshing period may occur or undulations may occur in the rotation period. When the deformed portion of each gear tooth 31 is substantially at the same position as in the present embodiment, such troubles can be reduced.

Next, the positional relationship between each recess 265 and each rib 270 (each first rib 271 and each second rib 272) in the sleeve 26 will be described. As described above, each first rib 271 and each second rib 272 have the same shape and are disposed at mutually corresponding positions. Therefore, description will be given taking the first rib 271 as an example and description of the second rib 272 will be omitted. The positional relationship between one recess 265 and one first rib 271 will be described as an example, and the same applies to the positional relationships between the other recesses 265 and the other first ribs 271.

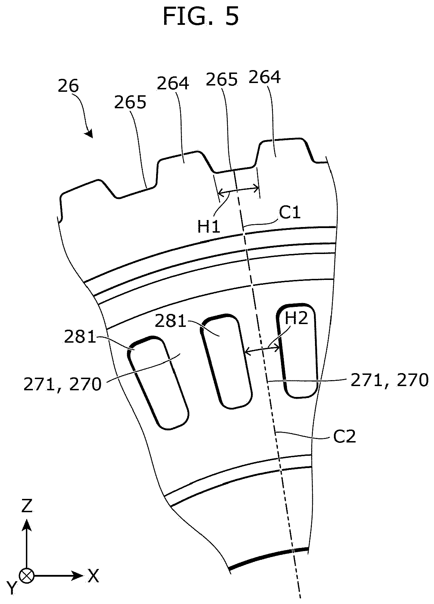

FIG. 5 is a partial front view of part of the sleeve 26 according to the embodiment that is viewed from the front side. As shown in FIG. 5, a central line C1 of the recess 265 in the circumferential direction (shown by a long dashed short dashed line) coincides with a central line C2 of the first rib 271 in the circumferential direction (shown by a long dashed double-short dashed line). Specifically, the central line C1 is a line that bisects a width H1 of the recess 265 in the circumferential direction, and is a straight line passing through the central axis C. Similarly, the central line C2 is a line that bisects a width H2 of the first rib 271 in the circumferential direction, and is a straight line passing through the central axis C. Thus, the rigidity of each first rib 271 in the radial direction can be made as uniform as possible. The same applies to each second rib 272.

The width H2 of the first rib 271 in the circumferential direction is preferably larger than the width H1 of the recess 265 in the circumferential direction. In this case, the rigidity of the first rib 271 in the circumferential direction can be increased. The same applies to each second rib 272.

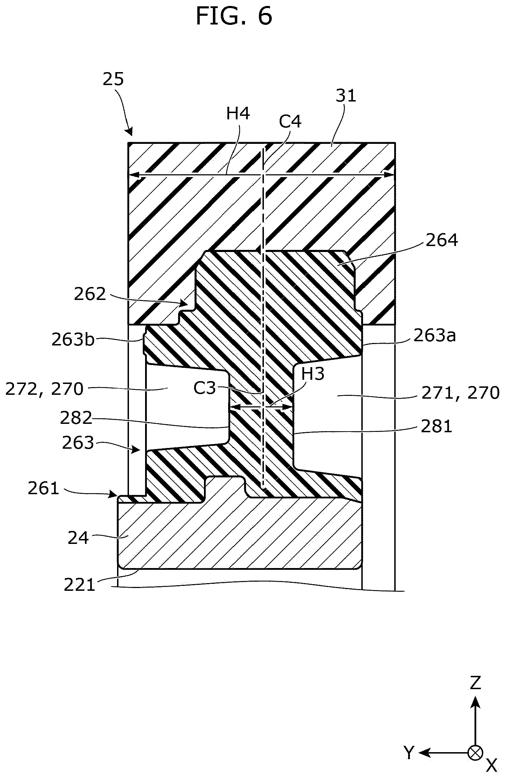

Next, the positional relationship between the toothing 25 and the sleeve 26 will be described. FIG. 6 is a partial sectional view of part of the toothing 25 and the sleeve 26 according to the embodiment that are viewed in the X-axis direction. FIG. 6 shows the positional relationship between one set of the first hole 281 and the second hole 282 and one gear tooth 31 corresponding to the set, and the same applies to the positional relationships between the other sets of the first hole 281 and the second hole 282 and the other gear teeth 31 corresponding to the other sets. As shown in FIG. 6, a central line C3 between the first hole 281 and the second hole 282 as a set in the axial direction (Y-axis direction) (shown by a long dashed double-short dashed line) coincides with a central line C4 of the gear tooth 31 in the axial direction (shown by a long dashed short dashed line). Specifically, the central line C3 is a line that bisects a length H3 in the Y-axis direction between the bottom of the first hole 281 and the bottom of the second hole 282, and is a straight line parallel to the Z-axis direction. Similarly, the central line C4 is a line that bisects a length H4 of the gear tooth 31 in the Y-axis direction, and is a straight line parallel to the Z-axis direction. Thus, tilting of the first rib 271 and the second rib 272 in the axial direction can be minimized.

### [Effects etc.]

As described above, in the gear according to the present embodiment, the first installation location count L, the second installation location count M, and the third installation location count N are equal to each other. Therefore, each portion of the sleeve 26 slightly deformed during the manufacturing and each gear tooth 31 are present at synchronized positions in the circumferential direction. Thus, even if each gear tooth 31 is also slightly deformed due to each slightly deformed portion of the sleeve 26, the deformed portion of each gear tooth 31 can also be generated substantially at the same position. Accordingly, the fluctuation in a period different from the meshing period and the undulations in the rotation period can be suppressed. As a result, a decrease in the accuracy of the gear 22 can be suppressed.

Since the central line C1 of the recess 265 in the circumferential direction coincides with the central line C2 of the rib 270 (first rib 271, second rib 272) in the circumferential direction, the rigidity of each rib 270 in the radial direction can be made as uniform as possible. Therefore, the number of slightly deformed portions of the sleeve 26 can be reduced. Thus, the decrease in the accuracy of the gear 22 can further be suppressed.

Since the central line C3 between the first hole 281 and the second hole 282 in the axial direction coincides with the central line C4 of the gear tooth 31 in the axial direction, the tilting of the first rib 271 and the second rib 272 in the axial direction can be minimized. Therefore, the undulations in the rotation period can be suppressed. Thus, the decrease in the accuracy of the gear 22 can further be suppressed.

In the gear 22 used in the steering system 1, the decrease in the accuracy is suppressed as described above. Therefore, the operation of the steering system 1 can be stabilized.

### [Others]

Although the gear and the steering system according to the present invention have been described above based on the above embodiment, the present invention is not limited to the above embodiment.

For example, the above embodiment illustrates the case where the first installation location count L and the second installation location count M are equal to the third installation location count N. However, it is only necessary that the first installation location count L and the second installation location count M be equal to each other and be integral multiples of the third installation location count N. For example, even if each of the first installation location count L and the second installation location count M is Q times (Q is an integer of N) or more as large as the third installation location count N, the deformed portion of each gear tooth 31 due to each slightly deformed portion of the sleeve 26 can be generated at a position that is close to some extent. That is, the decrease in the accuracy of the gear can be suppressed in this case as well.

The above embodiment illustrates the case where the central line C1 of the recess 265 coincides with the central line C2 of the rib 270. However, it is only necessary that the central line C1 of the recess 265 be within the width of the rib 270 in the circumferential direction. In this case as well, the rigidity of each rib 270 in the radial direction can be made uniform to some extent.

The above embodiment illustrates the case where the central line C3 between the first hole 281 and the second hole 282 in the axial direction coincides with the central line C4 of the gear tooth 31. However, it is only necessary that the central line C4 of the gear tooth 31 be present between the first hole 281 and the second hole 282 in the axial direction. In this case as well, the tilting of the first rib 271 and the second rib 272 in the axial direction can be suppressed to some extent.

The above embodiment illustrates the case where the first hole 281 and the second hole 282 as a set each have a bottomed shape. However, the first hole 281 and the second hole 282 as a set may extend through their bottoms in the axial direction. Thus, the weight of the gear 22 can further be reduced.

The above embodiment illustrates the case where the plurality of first ribs 271 is provided on the first principal surface 263a of the connecting portion 263 and the plurality of second ribs 272 is provided on the second principal surface 263b. However, the plurality of ribs may be provided only on one of the first principal surface and the second principal surface in the connecting portion.

The above embodiment illustrates the case where the output shaft 9 is press-fitted to the through hole 221 of the collar 24 of the gear 22 to connect the gear 22 to the output shaft 9 so that the gear 22 is rotatable together with the output shaft 9. However, serrations may be provided on the inner peripheral surface of the collar and the outer peripheral surface of the output shaft, and the collar and the output shaft may be fitted with the serrations. The collar may be omitted from the gear. In this case, the sleeve is connected directly to the output shaft.

The present invention also includes forms obtained by applying various modifications conceivable by those skilled in the art to the embodiment, or forms realized by arbitrarily combining the components and functions in the embodiment and modifications without departing from the present invention as defined by the appended claims.

### [Industrial Applicability]

The present invention is applicable to a gear to be used in a speed reducer.

### Description of the Reference Numerals

1 ... steering system, 2 ... steering wheel, 3 ... steered wheel, 4 ... steering operation mechanism, 5 ... assist mechanism, 6 ... steering mechanism, 7 ... intermediate shaft, 8 ... input shaft, 9 ... output shaft, 10 ... torsion bar, 11 ... torque sensor, 12 ... ECU, 13 ... vehicle speed sensor, 15 ... pinion shaft, 15a ... pinion, 16 ... rack shaft, 16a ... rack, 17 ... tie rod, 19 ... electric motor, 20 ... speed reducer, 21 ... worm, 22 ... gear, 23 ... housing, 24 ... collar, 25 ... toothing, 26 ... sleeve, 31 ... gear tooth, 221 ... through hole, 261 ... inner peripheral portion, 262 ... outer peripheral portion, 263 ... connecting portion, 263a ... first principal surface, 263b ... second principal surface, 264 ... protrusion, 265 ... recess, 270 ... rib, 271 ... first rib, 272 ... second rib, 281 ... first hole, 282 ... second hole, C ... central axis, C1, C2, C3, C4 ... central line, H1, H2 ... width, H3, H4 ... length, T ... steering torque, V ... vehicle speed

## Claims

1. A gear (22) comprising:
a resin sleeve having a disc shape; and
a resin toothing that covers an outer peripheral portion (262) of the sleeve (26) and includes a plurality of gear teeth (31) arranged at equal intervals in a circumferential direction, wherein:
the sleeve (26) includes
a plurality of protrusions (264) arranged on an outer peripheral surface at equal intervals in the circumferential direction, and
a plurality of ribs (270) arranged at equal intervals in the circumferential direction at positions on a radially inner side of the protrusions (264); and
a first installation location count of the protrusions (264) in the circumferential direction and a second installation location count of the ribs (270) in the circumferential direction are equal to each other and are integral multiples of a third installation location count of the gear teeth (31) in the circumferential direction, **characterized in that**
in all of recesses present between the plurality of protrusions (264) in the circumferential direction, a central line of each recess in the circumferential direction is within a width of a corresponding one of the plurality of ribs (270) in the circumferential direction.

2. The gear (22) according to claim 1, wherein the first installation location count and the second installation location count are equal to the third installation location count.

3. The gear (22) according to claim 1 or 2, wherein the central line of the recess (265) in the circumferential direction coincides with a central line of the rib (270-272) in the circumferential direction.

4. The gear (22) according to any one of claims 1 to 3, wherein:
the plurality of ribs (270) includes a plurality of first ribs (271) provided on one principal surface of the sleeve (26), and a plurality of second ribs (272) provided on the other principal surface of the sleeve (26); and
a central line of the gear tooth (31) in an axial direction is present at a position in the axial direction between a first hole (281) that is present between the plurality of first ribs (271) in the circumferential direction and a second hole (282) that is present between the plurality of second ribs (272) in the circumferential direction.

5. The gear (22) according to claim 4, wherein a central line between the first hole (281) and the second hole (282) in the axial direction coincides with the central line of the gear tooth (31) in the axial direction.

6. A steering system comprising:
an electric motor (19) to be driven based on steering of a steering member; and
a speed reducer (20) including the gear (22) according to any one of claims 1 to 5 and configured to reduce a speed of output rotation of the electric motor (19) by the gear (22) and transmit the output rotation to a steering mechanism.

## Patentansprüche

1. Getriebe (22), mit:
einer Harzhülse, die eine Scheibenform aufweist; und
einer Harzverzahnung, die einen Außenumfangsabschnitt (262) der Hülse (26) abdeckt und eine Vielzahl von Getriebezähnen (31) aufweist, die in gleichen Abständen in einer Umfangsrichtung angeordnet sind, wobei:
die Hülse (26) Folgendes aufweist:
eine Vielzahl von Vorsprüngen (264), die auf einer Außenumfangsfläche in gleichen Abständen in der Umfangsrichtung angeordnet sind, und
eine Vielzahl von Rippen (270), die in gleichen Abständen in der Umfangsrichtung an Positionen auf einer radial inneren Seite der Vorsprünge (264) angeordnet sind; und
eine erste Einbaustellenanzahl der Vorsprünge (264) in der Umfangsrichtung und eine zweite Einbaustellenanzahl der Rippen (270) in der Umfangsrichtung einander gleich sind und ganzzahlige Vielfache einer dritten Einbaustellenanzahl der Getriebezähne (31) in der Umfangsrichtung sind, **dadurch gekennzeichnet, dass**
in allen Aussparungen, die zwischen der Vielzahl von Vorsprüngen (264) in der Umfangsrichtung vorhanden sind, eine Mittellinie jeder Aussparung in der Umfangsrichtung innerhalb einer Breite einer entsprechenden der Vielzahl von Rippen (270) in der Umfangsrichtung liegt.

2. Getriebe (22) nach Anspruch 1, wobei die erste Einbaustellenanzahl und die zweite Einbaustellenanzahl gleich der dritten Einbaustellenanzahl sind.

3. Getriebe (22) nach Anspruch 1 oder 2, wobei die Mittellinie der Aussparung (265) in der Umfangsrichtung mit einer Mittellinie der Rippe (270-272) in der Umfangsrichtung zusammenfällt.

4. Getriebe (22) nach einem der Ansprüche 1 bis 3, wobei:
die Vielzahl von Rippen (270) eine Vielzahl von ersten Rippen (271), die auf einer Hauptfläche der Hülse (26) vorgesehen sind, und eine Vielzahl von zweiten Rippen (272) aufweist, die auf der anderen Hauptfläche der Hülse (26) vorgesehen sind; und
eine Mittellinie des Getriebezahns (31) in einer axialen Richtung an einer Position in der axialen Richtung zwischen einem ersten Loch (281), das zwischen der Vielzahl von ersten Rippen (271) in der Umfangsrichtung vorhanden ist, und einem zweiten Loch (282) vorhanden ist, das zwischen der Vielzahl von zweiten Rippen (272) in der Umfangsrichtung vorhanden ist.

5. Getriebe (22) nach Anspruch 4, wobei eine Mittellinie zwischen dem ersten Loch (281) und dem zweiten Loch (282) in der axialen Richtung mit der Mittellinie des Getriebezahns (31) in der axialen Richtung zusammenfällt.

6. Lenksystem, mit:
einem Elektromotor (19), der basierend auf einem Lenken eines Lenkelements anzutreiben ist; und
einem Drehzahlminderer (20), der das Getriebe (22) nach einem der Ansprüche 1 bis 5 aufweist und konfiguriert ist, um eine Drehzahl einer Ausgangsdrehung des Elektromotors (19) durch das Getriebe (22) zu reduzieren und die Ausgangsdrehung auf einen Lenkmechanismus zu übertragen.

## Revendications

1. Engrenage (22) comprenant :
un manchon en résine présentant la forme d'un disque ; et
une denture en résine qui recouvre une partie périphérique extérieure (262) du manchon (26) et inclut une pluralité de dents d'engrenage (31) disposées à intervalles égaux dans une direction circonférentielle, dans lequel :
le manchon (26) inclut
une pluralité de saillies (264) disposées sur une surface périphérique extérieure à intervalles égaux dans la direction circonférentielle, et
une pluralité de nervures (270) disposées à intervalles égaux dans la direction circonférentielle dans des positions situées sur un côté radialement intérieur des saillies (264) ; et
un premier nombre d'emplacements d'installation des saillies (264) dans la direction circonférentielle et un deuxième nombre d'emplacements d'installation des nervures (270) dans la direction circonférentielle sont égaux entre eux et sont des multiples entiers d'un troisième nombre d'emplacements d'installation des dents d'engrenage (31) dans la direction circonférentielle, **caractérisé en ce que**
dans tous les évidements présents entre la pluralité de saillies (264) dans la direction circonférentielle, une ligne centrale de chaque évidement dans la direction circonférentielle se trouve dans la largeur d'une nervure correspondante de la pluralité de nervures (270) dans la direction circonférentielle.

2. Engrenage (22) selon la revendication 1, dans lequel le premier nombre d'emplacements d'installation et le deuxième nombre d'emplacements d'installation sont égaux au troisième nombre d'emplacements d'installation.

3. Engrenage (22) selon la revendication 1 ou 2, dans lequel la ligne centrale de l'évidement (265) dans la direction circonférentielle coïncide avec une ligne centrale de la nervure (270-272) dans la direction circonférentielle.

4. Engrenage (22) selon l'une quelconque des revendications 1 à 3, dans lequel :
la pluralité de nervures (270) inclut une pluralité de premières nervures (271) disposées sur une surface principale du manchon (26), et une pluralité de secondes nervures (272) disposées sur l'autre surface principale du manchon (26) ; et
une ligne centrale de la dent d'engrenage (31) dans une direction axiale est présente dans une position dans la direction axiale entre un premier trou (281) qui est présent entre la pluralité de premières nervures (271) dans la direction circonférentielle et un second trou (282) qui est présent entre la pluralité de secondes nervures (272) dans la direction circonférentielle.

5. Engrenage (22) selon la revendication 4, dans lequel une ligne centrale entre le premier trou (281) et le second trou (282) dans la direction axiale coïncide avec la ligne centrale de la dent d'engrenage (31) dans la direction axiale.

6. Système de direction comprenant :
un moteur électrique (19) à entraîner sur la base de la direction d'un élément de direction ; et
un réducteur de vitesse (20) incluant l'engrenage (22) selon l'une quelconque des revendications 1 à 5 et configuré pour réduire une vitesse de rotation de sortie du moteur électrique (19) par l'engrenage (22) et transmettre la rotation de sortie à un mécanisme de direction.
